# EUROPEAN PATENT APPLICATION

(11) **EP 2 211 400 A1**
(43) Date of publication of application: **28.07.2010**
(21) Application number: 08844620.8
(22) Date of filing: 25.09.2008
(51) Int. Cl.: H01M 2/26, H01M 4/70, H01M 10/04, H01M 10/30, H01M 10/40

(54) **SECONDARY BATTERY**

(30) Priority: 29.10.2007 JP 2007280165
(71) Applicant: Panasonic Corporation, Kadoma-shi Osaka 571-8501 (JP)
(72) Inventor: KOZUKI, Kiyomi, Osaka 540-6207 (JP); FUJITA, Hideaki, Osaka 540-6207 (JP); OKADA, Yukihiro, Osaka 540-6207 (JP); HIRAKAWA, Yasushi, Osaka 540-6207 (JP)
(74) Representative: Grünecker, Kinkeldey, Stockmair & Schwanhäusser Anwaltssozietät
(86) International application number: PCT/JP2008/002664
(87) International publication number: WO 2009/057242

(57) **Abstract**

A secondary battery has a so-called tabless structure. An electrode group (4) includes an exposed end (1a) and a body portion (5). In the exposed end (1a), a current collector is exposed. In the body portion (5), an active material is provided on a surface of the current collector. A current collector plate (10) includes a principal surface (11) to which the electrode group (4) is connected, and projections (13) provided on the periphery of the principal surface (11). Moreover, in a direction in which a positive electrode plate (1), a porous insulating layer (3) and a negative electrode plate (2) are sequentially arranged, a width of the current collector plate (10) is equal to or smaller than a width of the body portion (5). Furthermore, the projections (13) sandwich the exposed end (1a) in a direction perpendicular to a longitudinal direction of the exposed end (1a).

## Description

### TECHNICAL FIELD

The present invention relates to secondary batteries, and specifically to secondary batteries having a tabless structure.

### BACKGROUND ART

In recent years, secondary batteries used as power sources for driving devices have been developed as one type of important key devices. Among such batteries, nickel hydride storage batteries or lithium ion secondary batteries have been widely used as power sources for driving a wide range of devices including consumer electronics such as mobile phones, electric vehicles, and electric tools because of their light weight, small size, and high energy density. Recently, particular attention has been drawn to lithium ion secondary batteries as power sources for driving devices, and thus the lithium ion secondary batteries have been actively developed to increase its capacity and its output.

Secondary batteries used as power sources for driving devices are required to output a large current. For this reason, secondary batteries having devised battery configurations, in particular, devised current collecting structures have been proposed.

For example, the electrical resistance in a tabless current collecting structure in which end portions in a width direction of a positive electrode plate and a negative electrode plate are respectively joined to current collector plates can be lower than that in a structure configured to collect a current via a tab. Thus, the tabless current collecting structure is suitable for discharging a large current. However, for tabless current collection, the end portions in the width direction of the positive electrode plate and the negative electrode plate have to be securely joined respectively to the current collector plates.

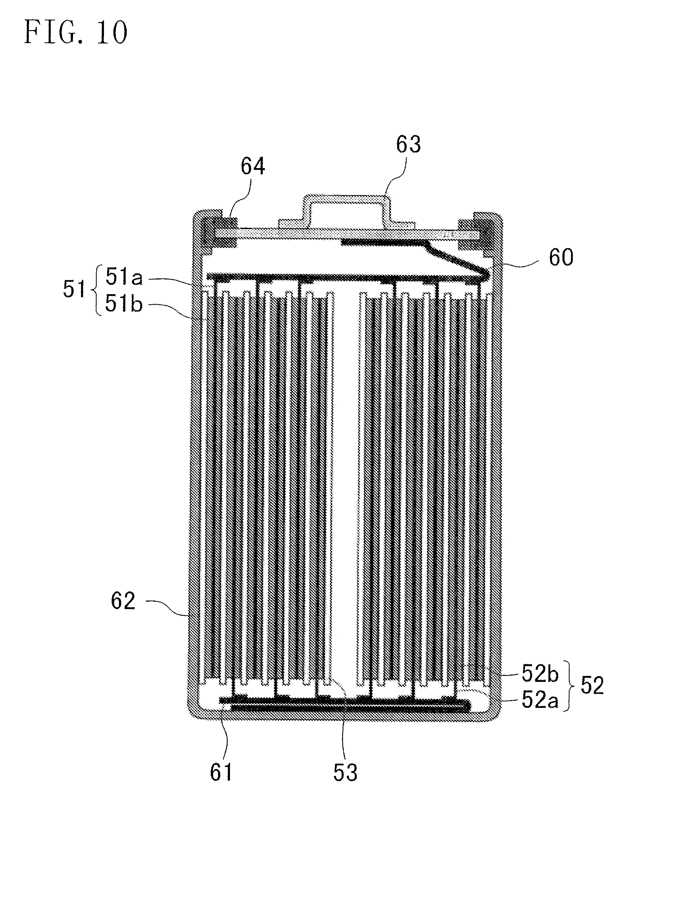

FIG. 10 is a longitudinal cross-sectional view illustrating a cylindrical secondary battery described in Patent Document 1. As shown in FIG. 10, in an electrode group of the cylindrical secondary battery, a positive electrode plate 51 and a negative electrode plate 52 are wound with a separator 53 interposed therebetween, where the positive electrode plate 51 and the negative electrode plate 52 are displaced to each other in opposite directions. An end portion (mixture material uncoated portion) 51a of the positive electrode plate 51 and an end portion (mixture material uncoated portion) 52a of the negative electrode plate 52 which project from the separator 53 are respectively joined to a positive electrode current collector plate 60 and a negative electrode current collector plate 61 by welding. Here, the end portion 51a of the positive electrode plate 51 and the end portion 52a of the negative electrode plate 52 are pressed in an axial direction of winding (in a vertical direction in the figure) to form flat portions at the end portion 51a of the positive electrode plate 51 and the end portion 52a of the negative electrode plate 52. The flat portions formed at the end portion 51a and the end portion 52a are respectively welded to the positive electrode current collector plate 60 and the negative electrode current collector plate 61. In a current collecting structure formed in this manner, the flat portions of the positive electrode plate 51 and the negative electrode plate 52 are respectively brought into contact with the positive electrode current collector plate 60 and the negative electrode current collector plate 61, and then are welded to the positive electrode current collector plate 60 and the negative electrode current collector plate 61. Therefore, a simple method allows the positive electrode current collector plate 60 and the negative electrode current collector plate 61 to be joined respectively to the end portion 51a of the positive electrode plate 51 and the end portion 52a of the negative electrode plate 52 without position adjustment of the positive electrode current collector plate 60 and the negative electrode current collector plate 61 relative to end faces of the electrode group.

However, in terms of increasing the capacity and reducing the size of the secondary battery, the above method poses the following problems. That is, when current collectors constituting the positive electrode plate 51 and the negative electrode plate 52 are made of thin foils in order to reduce the size of the secondary battery, it is not possible for the current collectors made of the thin foils to have mechanical strength. Therefore, it is difficult to form uniformly bent flat portions at the end portion 51a of the positive electrode plate 51 and the end portion 52a of the negative electrode plate 52 even if the end portion 51a of the positive electrode plate 51 and the end portion 52a of the negative electrode plate 52 are pressed. In particular, in a lithium ion secondary battery, aluminum or copper is used as a material for current collectors constituting the positive electrode plate 51 and the negative electrode plate 52. Therefore, when the current collectors have a thickness of, for example, about 20 µm or less, it is very difficult to form flat portions at the end portion 51a of the positive electrode plate 51 and the end portion 52a of the negative electrode plate 52 by pressing the end portion 51a of the positive electrode plate 51 and the end portion 52a of the negative electrode plate 52. Moreover, pressing the end portion 51a and the end portion 52a causes strain at the end portion 51a of the positive electrode plate 51 and the end portion 52a of the negative electrode plate 52. This causes problems where, for example, a mixture material falls off a mixture material coated portion 51b of the positive electrode plate 51 and a mixture material coated portion 52b of the negative electrode plate 52, or cracks are formed in the mixture material coated portion 51 b of the positive electrode plate 51 and the mixture material coated portion 52b of the negative electrode plate 52.

In order to solve such problems, for example, Patent Documents 2 and 3 disclose the following current collecting structures.

FIG. 11 is a perspective view illustrating a secondary battery described in Patent Document 2. As shown in FIG. 11, in an electrode group 74, a positive electrode plate and a negative electrode plate are wound with a separator interposed therebetween, where the positive electrode plate and the negative electrode plate are displaced to each other in opposite directions. In the electrode group 74, an end portion 71a of the positive electrode plate and an end portion 72a of the negative electrode plate which project from the separator are respectively joined to a positive electrode current collector plate 80 and a negative electrode current collector plate 81 by welding. The positive electrode current collector plate 80 and the negative electrode current collector plate 81 respectively include a flat plate portion 80a and a flat plate portion 81a. At edges in a width direction of the flat plate portion 80a and the flat plate portion 81 a, a pair of ribs 80b projecting toward the end portion 71a of the positive electrode plate and a pair of ribs 81b projecting toward the end portion 72a of the negative electrode plate are respectively formed. Between adjacent projecting portions 80c, a plurality of through holes 80d are formed side by side in the width direction of the flat plate portion 80a. Between adjacent projecting portions 81c, a plurality of through holes 81d are formed side by side in the width direction of the flat plate portion 81a. The end portion 71a of the positive electrode plate is inserted between the pair of ribs 80b, and the end portion 72a of the negative electrode plate is inserted between the pair of ribs 81b. The projecting portions 80c and the projecting portions 81c are respectively engaged in the end portion 71a of the positive electrode plate and the end portion 72a of the negative electrode plate. The end portion 71a of the positive electrode plate and the end portion 72a of the negative electrode plate are respectively joined to the positive electrode current collector plate 80 and the negative electrode current collector plate 81 by laser welding performed toward inner peripheral surfaces of the projecting portions 80c and the projecting portions 81c.

In a current collecting structure formed by such a method, the end portion 71 a of the positive electrode plate and the end portion 72a of the negative electrode plate are respectively gathered to the center, and bundled by the pair of ribs 80b and the pair of ribs 81b at joint portions. Thus, the positive electrode current collector plate 80 and the negative electrode current collector plate 81 are respectively positioned relative to the end portion 71a of the positive electrode plate and the end portion 72a of the negative electrode plate, so that it is possible to prevent the positive electrode current collector plate 80 and the negative electrode current collector plate 81 from being dislocated in a radial direction of the electrode group 74. Moreover, the positive electrode current collector plate 80 and the negative electrode current collector plate 81 are respectively laid on the end portion 71 a of the positive electrode plate and the end portion 72a of the negative electrode plate, so that the end portion 71a of the positive electrode plate and the end portion 72a of the negative electrode plate can be respectively brought into contact with the projecting portions 80c and the projecting portions 81c. Therefore, even if welding is performed with higher power than that in known methods, no blowout occurs in the joint portions, and thus the end portion 71 a of the positive electrode plate and end portion 72a of the negative electrode plate can be securely joined respectively to the positive electrode current collector plate 80 and the negative electrode current collector plate 81.

FIG. 12 is a perspective view illustrating a secondary battery described in Patent Document 3. As shown in FIG. 12, in an electrode group 94, a positive electrode plate and a negative electrode plate are wound with a separator interposed therebetween, where the positive electrode plate and the negative electrode plate are displaced to each other in opposite directions. In the electrode group 94, an end portion 91 a of the positive electrode plate and an end portion 92a of the negative electrode plate which project from the separator are respectively joined to a positive electrode current collector plate 100 and a negative electrode current collector plate 101 by welding. Here, the positive electrode current collector plate 100 and the negative electrode current collector plate 101 respectively engage with the end portion 91a of the positive electrode plate and the end portion 92a of the negative electrode plate. This can enhance adhesion between the positive electrode current collector plate 100 and the end portion 91a of the positive electrode plate, and adhesion between the negative electrode current collector plate 101 and the end portion 92a of the negative electrode plate. Therefore, it is possible to securely join the end portion 91a of the positive electrode plate and the end portion 92a of the negative electrode plate respectively to the positive electrode current collector plate 100 and the negative electrode current collector plate 101.

### CITATION LIST

### PATENT DOCUMENT

PATENT DOCUMENT 1: Japanese Patent Publication No. 2000-323117
PATENT DOCUMENT 2: Japanese Patent Publication No. 2005-267945
PATENT DOCUMENT 3: Japanese Patent Publication No. 2006-012836

### SUMMARY OF THE INVENTION

### TECHNICAL PROBLEM

However, in Patent Documents 2 and 3, since the current collector plates cover the end faces of the electrode group, the width of the current collector plates is larger than that of the electrode group in a direction in which the positive electrode plate, a porous insulating layer, and the negative electrode plate are disposed in this order. This increases the size and reduces the capacity of the secondary battery, and thus the volumetric energy density of the secondary battery may decrease.

Meanwhile, when the width of the current collector plates is smaller than that of the electrode group in the direction in which the positive electrode plate, the porous insulating layer, and the negative electrode plate are disposed in this order, exposed ends (the end portions of the electrode plates which project from the separator) in the periphery of the electrode group are not connected to the current collector plates. As a result, charge/discharge in the periphery of the electrode group is no longer possible, which may reduce the charge/discharge performance of the secondary battery.

Moreover, when the width of the current collector plates is smaller than that of the electrode group in the direction in which the positive electrode plate, the porous insulating layer, and the negative electrode plate are disposed in this order, sputters or the like may enter the electrode group while the current collector plates are being welded to the end faces of the electrode group. If sputters enter the electrode group, the sputters may adhere to the porous insulating layer or an active material layer, which may thermally damage the porous insulating layer or an active material layer, thereby causing damage to the electrode group. As a result, the performance of the secondary battery may be reduced. Moreover, the fact that sputters enter the electrode group means that metal foreign substances are included in the electrode group, which may cause an internal short-circuit.

The present invention was devised in consideration of these conventional circumstances. It is an objective of the present invention to provide a secondary battery in which the decrease in volumetric energy density is reduced, and the performance of the secondary battery is improved.

### SOLUTION TO THE PROBLEM

A secondary battery of the present invention includes an electrode group and a current collector plate. The electrode group includes a positive electrode plate, a negative electrode plate, and a porous insulating layer disposed between the positive electrode plate and the negative electrode plate, where the positive electrode plate, the negative electrode plate, and the porous insulating layer are arranged such that an exposed end which is one end in a width direction of at least one of the positive electrode plate and the negative electrode plate projects from the porous insulating layer. The electrode group includes the exposed end, and further includes a body portion. In the exposed end, a current collector is exposed. The body portion is located at an inner position relative to the exposed end in the width direction of the electrode plate, and has an active material provided on a surface of the current collector. Moreover, the current collector plate includes a principal surface and projections. The principal surface is a surface to which the exposed end is connected. The projections are disposed on at least portions of a periphery of the principal surface. In a direction in which the positive electrode plate, the porous insulating layer, and the negative electrode plate are arranged in this order, a width of the current collector plate is equal to or smaller than a width of the body portion. Moreover, the projections sandwich the exposed end in a direction perpendicular to a longitudinal direction of the exposed end.

With the above configuration, in the direction in which the positive electrode plate, the porous insulating layer, and the negative electrode plate are arranged in this order, the width of the current collector plate is equal to or smaller than the width of the body portion. Therefore, it is possible to reduce the volumetric energy density.

Moreover, the projections can reduce the tendency for the exposed end to be arranged outside the principal surface, and position the current collector plate relative to the electrode group. Thus, even in the periphery of the electrode group, the exposed end can be connected to the current collector plate, which allows charge/discharge even in the periphery of the electrode group. Moreover, since the exposed end is covered with the current collector plate even in the periphery of the electrode group, it is possible to reduce the tendency for sputters produced during welding to enter the electrode group. As described above, it is possible to ensure the charge/discharge performance of the secondary battery.

Furthermore, since the projections are provided, portions of the periphery of the current collector plate have a larger thickness in comparison to a current collector plate without projections. Thus, even if during welding, the periphery of a surface opposite to the principal surface is irradiated with energy, it is possible to prevent the periphery of the current collector plate from being holed in comparison to the current collector plate without projections. Therefore, it is possible to solidly join the current collector plates to the electrode group, thereby allowing the reliability of the secondary battery to be improved.

Here, the direction in which the positive electrode plate, the porous insulating layer, and the negative electrode plate are arranged in this order is a direction in which electrode plates are stacked in a layered secondary battery, and is a direction substantially perpendicular to wound electrode plates in a wound secondary battery (radial direction).

In a preferable embodiment described later, in the electrode group, the positive electrode plate and the negative electrode plate are wound with the porous insulating layer interposed therebetween, and the electrode group has a cylindrical shape.

When the secondary battery is cylindrical, the electrode group and the current collector plate preferably have the following configuration. The electrode group has a cavity extending in an axial direction. The current collector plate has a through hole passing through the current collector plate in its thickness direction. The current collector plate is connected to the exposed end such that the through hole communicates with the cavity. A diameter of the through hole is equal to or smaller than a diameter of the cavity. Moreover, second projections are provided on portions of the principal surface of the current collector plate in a periphery of the through hole. The second projections reduce the tendency for the exposed end to be disposed to fill the through hole.

With the above configuration, since the second projections are provided, it is possible to reduce the tendency for the exposed end to be disposed to fill the through hole, and it is possible to position the current collector plate relative to the electrode group. Moreover, even in the periphery of the cavity of the electrode group, the exposed end can be connected to the current collector plate.

Further, since the exposed end is covered with the current collector plate even in the periphery of the cavity of the electrode group, it is possible to reduce the tendency for sputters produced during welding to enter the electrode group.

Furthermore, since the second projections are provided, portions of the current collector plate in the periphery of the through hole are larger in thickness in comparison to a current collector plate without second projections. Thus, during welding, even if the surface opposite to the principal surface in the periphery of the through hole is irradiate with energy, it is possible to prevent the principal surface in the periphery of the through hole from being holed in comparison to the current collector plate without second projections. Therefore, it is possible to solidly join the current collector plate to the electrode group, thereby allowing the reliability of the secondary battery to be improved.

### ADVANTAGES OF THE INVENTION

According to the present invention, it is possible to reduce the decrease in volumetric energy density of the secondary battery, and it is possible to ensure the performance of the secondary battery.

### BRIEF DESCRIPTION OF THE DRAWINGS

[FIG. 1] FIG. 1A is a plan view illustrating a configuration of a positive electrode plate of a first embodiment of the present invention.. FIG. 1B is a plan view illustrating a configuration of a negative electrode plate of the first embodiment. FIG. 1C is a perspective view illustrating a configuration of an electrode group of the first embodiment.
[FIG. 2] FIG. 2 is a perspective view illustrating a cross section of a current collector plate of the first embodiment.
[FIG. 3] FIG. 3 is a cross-sectional view schematically illustrating a state before the current collector plate is joined to the electrode group of the first embodiment.
[FIG. 4] FIG. 4 is a cross-sectional view schematically illustrating a state after the current collector plate is a connected to the electrode group of the first embodiment.
[FIG. 5] FIG. 5 is a cross-sectional view illustrating a configuration of a secondary battery of the first embodiment.
[FIG. 6] FIG. 6 is a perspective view illustrating a current collecting structure of a first variation.
[FIG. 7] FIG. 7 is a plan view of the current collecting structure seen from the direction VII of FIG. 6.
[FIG. 8] FIG. 8 is a perspective view illustrating a configuration of a current collector plate 40 of a second variation.
[FIG. 9] FIGS. 9A and 9B are cross-sectional views illustrating configurations of current collector plates of a third variation.
[FIG. 10] FIG. 10 is a cross-sectional view illustrating a current collecting structure of a secondary battery of a first conventional example.
[FIG. 11] FIG. 11 is a perspective view illustrating a configuration of a current collecting structure of a second conventional example.

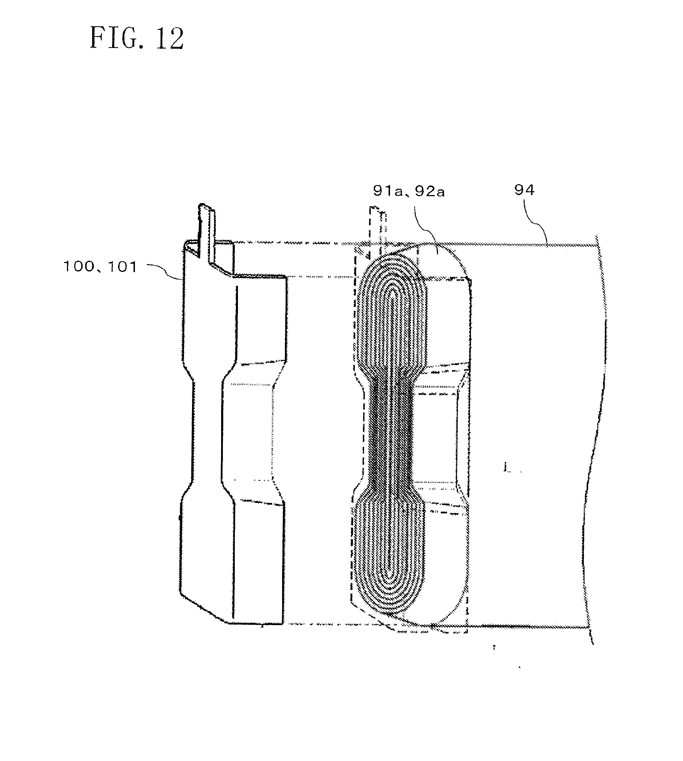

[FIG. 12] FIG. 12 is a perspective view illustrating a configuration of a current collecting structure of a third conventional example.

### DESCRIPTION OF REFERENCE CHARACTERS

- 1: Positive Electrode Plate
- 1a: Exposed End
- 2: Negative Electrode Plate
- 2a: Exposed End
- 3: Porous Insulating Layer
- 4: Electrode Group
- 5: Body Portion
- 10: Current Collector Plate
- 10a: Through Hole
- 11: Principal Surface
- 13: First Projection
- 14: Second Projection
- 20: Current Collector Plate
- 30: Current Collector Plate
- 33: First Projection
- 40: Current Collector Plate
- 110: Current Collector Plate
- 210: Current Collector Plate

### DESCRIPTION OF EMBODIMENTS

Prior to description of embodiments according to the present invention, the logic that the present invention was accomplished will be described below.

A current collector plate has the current collecting function of extracting a current from an electrode plate or supplying a current to the electrode plate. In addition to the current collecting function, the current collector plate preferably has the function of reducing the tendency for sputters to enter an electrode group, where the sputters are produced during welding if the current collector plate is welded to the electrode group. For this purpose, a surface (principal surface) of the current collector plate to which an end face of the electrode group is connected is preferably formed to have a larger size than that of the end face of the electrode group to cover the end face of the electrode group with the current collector plate.

Here, it is assumed that a current collecting structure having a principal surface whose size is larger than that of an end face of an electrode group (hereinafter simply referred to as "a current collecting structure having a larger current collector plate") and a current collecting structure having a principal surface whose size is smaller than that of an end face of an electrode group (hereinafter simply referred to as "a current collecting structure having a smaller current collector plate") are accommodated in the same battery cases. Here, in the current collecting structure having the smaller current collector plate, the size of the current collecting structure is determined by the size of the electrode group, and thus the size of the electrode group can be increased approximately to the size of hollow space in the battery case. In contrast, in the current collecting structure having the larger current collector plate, the size of the current collecting structure is determined by the size of the current collector plate, and thus the size of the electrode group cannot be increased approximately to the size of the hollow space in the battery case. Thus, in the current collecting structure having the larger current collector plate, it is difficult to increase the capacity, so that the volumetric energy density may decrease.

Moreover, when the end face of the electrode group is covered with the current collector plate, if the end face of the electrode group has a flat shape as in Patent Documents 2 and 3, linear portions of the electrode plate are at the end face of the electrode group, so that it is easy to cover the end face of the electrode group with the current collector plate by bundling the linear portions. However, if the electrode group has a cylindrical shape, it is difficult to cover the end face of the electrode group with the current collector plate. The two reasons are as follows.

First, there is no linear portion of electrode plate at the end face of the cylindrical electrode group, and thus the length of the electrode plate differs among turns. Therefore, when a plurality of exposed end portions of the cylindrical electrode group is bundled by an appropriate jig, stress is always applied to the inside of the turns of the electrode group since the length of the electrode plate differs among the turns. As a result, the entirety of the exposed end portions is creased, so that the electrode group is poorly bundled.

Second, when the current collector plate having the principal surface whose size is larger than that of the end face of the electrode group covers the electrode group, the current collector plate may pinch an exposed end portion, and the exposed end portion pinched by the current collector plate may be folded or cut off. This reduces the fabrication yield of the secondary battery. Thus, if the electrode group has a cylindrical shape, it is difficult to cover the end face of the electrode group with the current collector plate. As described above, if the size of the principal surface of the current collector plate is larger than the size of the end face of the electrode group, the volumetric energy density may decrease. Moreover, in the case of cylindrical secondary batteries, it is difficult to fabricate cylindrical secondary batteries with a high fabrication yield.

In contrast, in the current collecting structure having the smaller current collector plate, it is possible to reduce the decrease in volumetric energy density, but portions of the exposed end are exposed from the current collector plate. For this reason, the portions of the exposed end which are uncovered with the current collector plate are not welded to the current collector plate, thereby deteriorating the current collecting function in comparison to the current collecting structure having the larger current collector plate. Moreover, sputters or the like may enter the electrode group while welding, thereby damaging the electrode group. As described above, in the current collecting structure having the smaller current collector plate, the function of the secondary battery may be deteriorated.

As described above, it was found that changing the size of the principal surface of the current collector plate can achieve only one of the advantage of reducing the decrease in volumetric energy density, and the advantage of ensuring the current collecting function. The inventors of the present application focused their attention on this fact, and completed the secondary battery providing the two advantages described above.

Embodiments of the present invention will be described in detail below with reference to the drawings. Note that the same reference symbols are used to represent substantially equivalent elements, and the explanation thereof is omitted. Moreover, the present invention is not limited to the embodiments described below.

### (First Embodiment of the Invention)

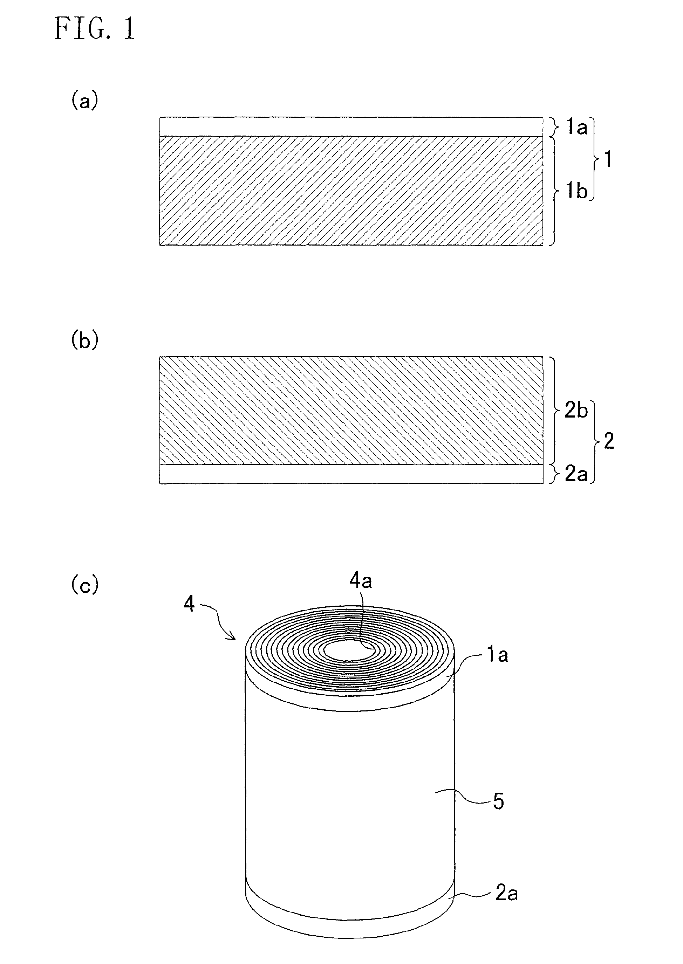

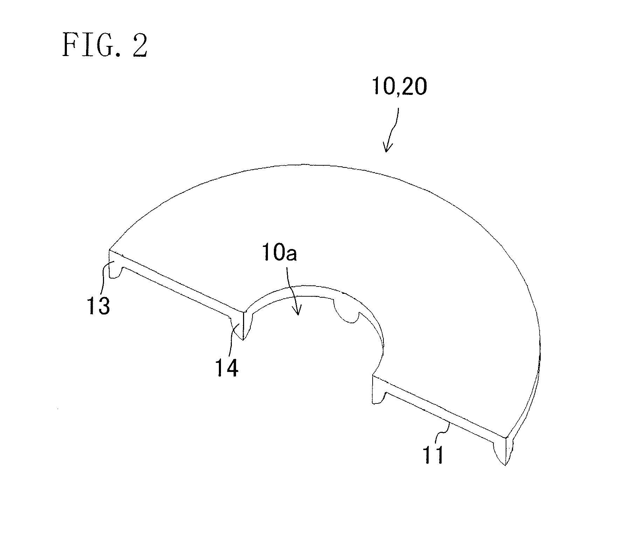

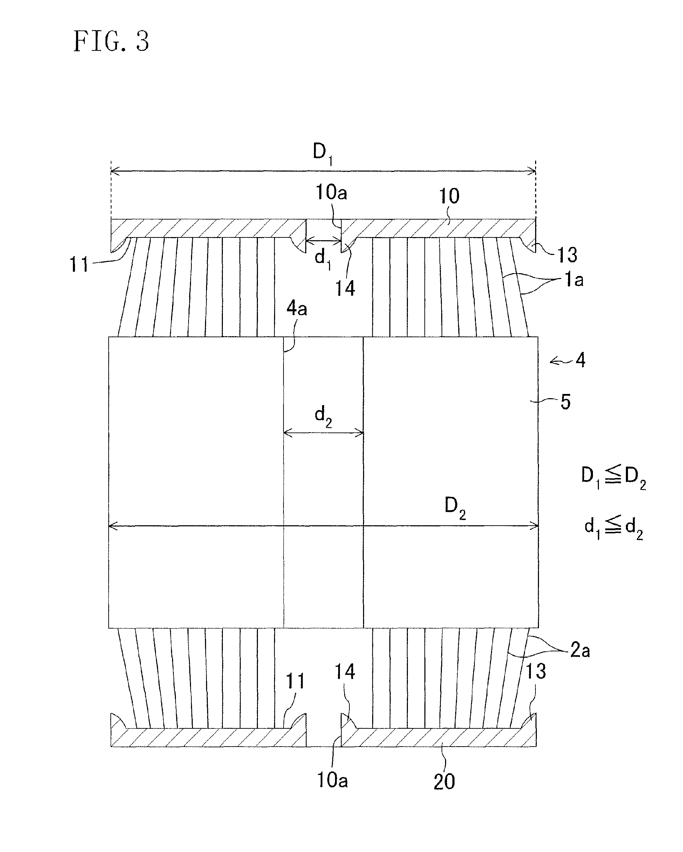

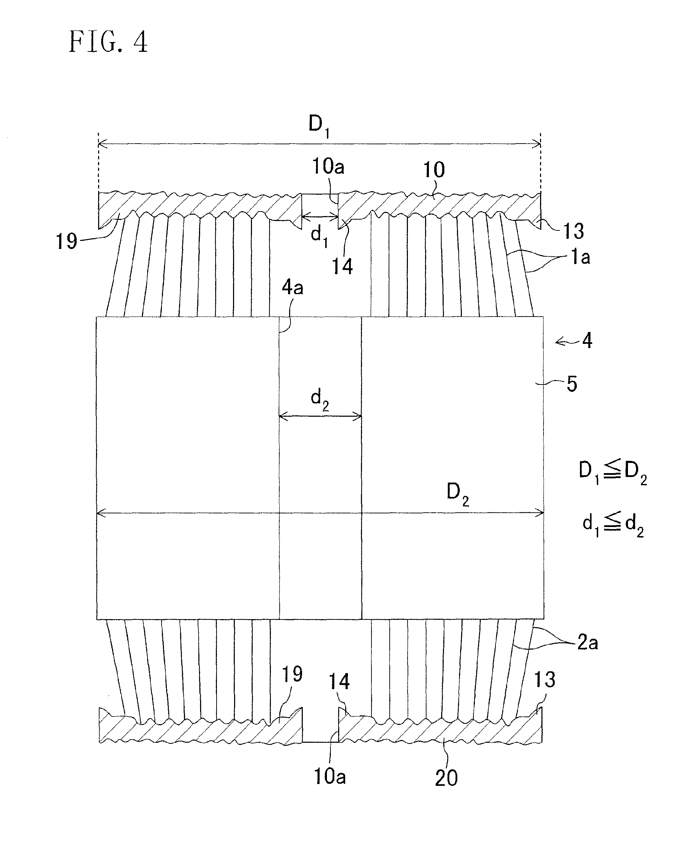

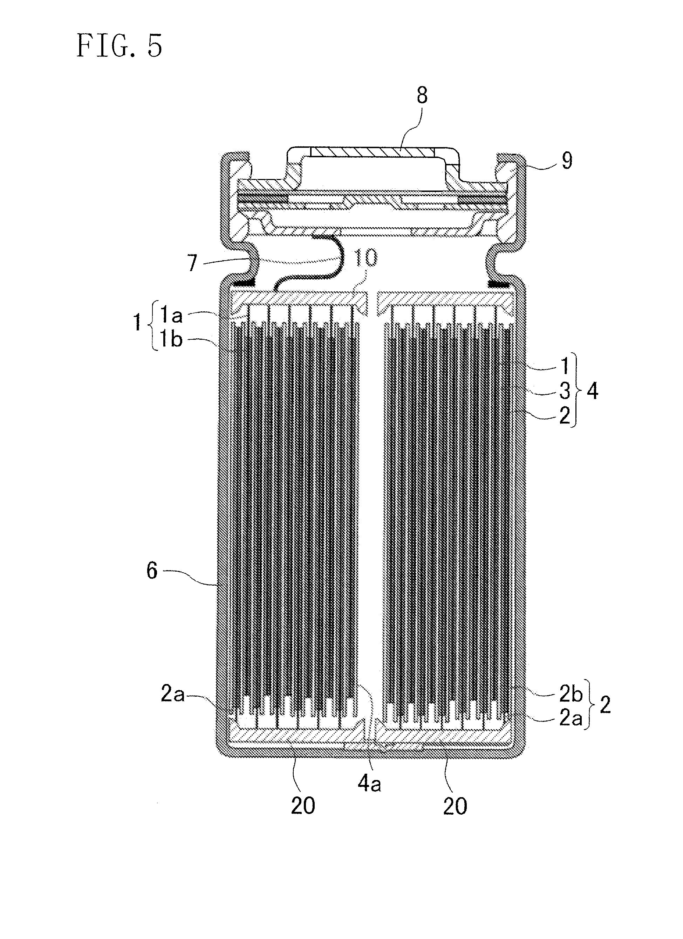

FIGS. 1A-1C schematically illustrate a structure of an electrode group 4 of a first embodiment, wherein FIG. 1A is a plan view of a positive electrode plate 1, FIG. 1B is a plan view of a negative electrode plate 2, and FIG. 1C is a perspective view of the electrode group 4. FIG. 2 is a perspective view schematically illustrating a cross-sectional structure of a positive electrode current collector plate 10 and a negative electrode current collector plate 20 of the present embodiment. FIG. 3 is a cross-sectional view schematically illustrating a state before the positive electrode current collector plate 10 and the negative electrode current collector plate 20 are connected to the electrode group 4. FIG. 4 is a cross-sectional view schematically illustrating a state after the positive electrode current collector plate 10 and the negative electrode current collector plate 20 are connected to the electrode group 4. FIG. 5 is a cross-sectional view schematically illustrating a structure of a secondary battery according to the present embodiment. Note that characterizing portions of the present embodiment are omitted in FIG. 5.

The secondary battery according to the present embodiment is a secondary battery having a tabless structure including a cylindrical electrode group 4, a positive electrode current collector plate 10 having a disk shape, and a negative electrode current collector plate 20 having a disk shape. In the secondary battery having the tabless structure, the positive electrode plate 1 of the electrode group 4 is joined to the positive electrode current collector plate 10 without a tab interposed therebetween, and the negative electrode plate 2 of the electrode group 4 is joined to the negative electrode current collector plate 20 without a tab interposed therebetween.

The electrode group 4 includes the positive electrode plate 1, the negative electrode plate 2, and the porous insulating layer 3. In the electrode group 4, the positive electrode plate 1 and the negative electrode plate 2 are wound with the porous insulating layer 3 interposed therebetween such that an exposed end 1a which is one end in a width direction of a positive electrode current collector and an exposed end 2a which is one end in a width direction of a negative electrode current collector project from the porous insulating layer 3 in opposite directions to each other as shown in FIG. 1C. Note that since the positive electrode plate 1, the negative electrode plate 2, and the porous insulating layer 3 are wound using a mandrel, a cavity 4a extending in an axial direction of the electrode group 4 is formed.

In the positive electrode plate 1, as shown in FIG. 1A, a surface of the exposed end 1a of the positive electrode current collector is uncoated with a positive electrode active material, and thus is exposed, whereas the other portions of the positive electrode current collector except the exposed end 1a are coated with the positive electrode active material, thereby forming a positive electrode coated portion 1b. Likewise, in the negative electrode plate 2, as shown in FIG. 1B, a surface of the exposed end 2a of the negative electrode current collector is uncoated with a negative electrode active material, and thus is exposed, whereas the other portions of the negative electrode current collector except the exposed end 2a are coated with the negative electrode active material, thereby forming a negative electrode coated portion 2b. In the electrode group 4, the positive electrode plate 1 and the negative electrode plate 2 are wound with the porous insulating layer 3 interposed therebetween, and thus the exposed end 1a is located at one end in the axial direction, the exposed end 2a is located at the other end in the axial direction, and a body portion 5 is located at a center portion in the axial direction. In the body portion 5, a surface of the positive electrode current collector is coated with the positive electrode active material, and a surface of the negative electrode current collector is coated with the negative electrode active material.

Here, the positive electrode coated portion 1b is preferably coated with a conductive agent, a binder, and the like in addition to the positive electrode active material. The negative electrode coated portion 2b is preferably coated with a binder, and the like in addition to the negative electrode active material.

Moreover, the porous insulating layer 3 may be a microporous film made of a resin, a porous insulating layer made of an insulating material such as a metal oxide, or a layered structure including the microporous film and the porous insulating layer.

Next, the positive electrode current collector plate 10 and the negative electrode current collector plate 20 will be described. Note that when it is unnecessary to identify the polarity, the polarity is omitted below, as in "electrode plate," "current collector plate," "exposed end," and the like, and the reference symbols for the positive electrode members are used.

The current collector plate 10 has a disk shape, and has a diameter (D1) equal to or smaller than the diameter (D₂) of the body portion 5 of the electrode group 4. With this configuration, in the secondary battery according to the present embodiment, it is possible to reduce the decrease in volumetric energy density. Moreover, at the center of the current collector plate 10, a through hole 10a passing through the current collector plate 10 in its thickness direction is formed. The through hole 10a preferably has a diameter (d₁) equal to or smaller than the diameter (d₂) of the cavity 4a of the electrode group 4.

The current collector plate 10 includes a principal surface 11 to which the exposed end 1a is connected. The principal surface 11 includes four first projections (proj ections) 13, 13, ... and four second projections (second projections) 14, 14, ....

The first projections 13, 13, ... are provided on the periphery of the principal surface 11, and arranged apart from each other in a circumferential direction of the principal surface 11. The first projections 13 sandwich the exposed end 1a in a direction perpendicular to a longitudinal direction of the exposed end 1a to prevent the exposed end 1a from being arranged outside the principal surface 11 of the current collector plate 10.

The second projections 14, 14, ... are provided on the principal surface 11 in the periphery of the through hole 10a, and arranged apart from each other in the circumferential direction of the principal surface 11. The second projections 14 prevent the exposed end 1a from being arranged to fill the through hole 10a of the current collector plate 10.

With reference to FIG. 3, a current collecting structure in which the current collector plate 10 is arranged on an end face of the electrode group 4 will be described. Note that in FIG. 3, the positive electrode plate 1, the negative electrode plate 2, and the porous insulating layer 3 in the body portion 5 of the electrode group 4 are omitted.

The current collector plate 10 is arranged on the end face of the electrode group 4 such that the through hole 10a communicates with the cavity 4a of the electrode group 4. Here, a plurality of exposed end portions 1a, 1a, ... is sandwiched between the first projection 13 and the first projection 13, so that the tendency for the exposed end portions to be arranged outside the principal surface 11 is reduced. Moreover, the plurality of exposed end portions 1a, 1a, ... is sandwiched between (i) the first projections 13 and (ii) the second projections 14, so that the tendency for the exposed end portions to be arranged to fill the through hole 10a is reduced. Thus, in the present embodiment, it is possible to prevent the exposed end portions 1a from being disposed outside the current collector plate 10, and to position the current collector plate 10 relative to the end face of the electrode group 4, so that an exposed end portion 1a at the outermost circumference of the electrode group 4 is also connected to the current collector plate. Thus, charge/discharge is possible even in the outermost circumference of the electrode group 4, which can ensure the charge performance and the discharge performance of the secondary battery.

Here, in a wound battery, the exposed end portions 1a, 1a, ... are exposed end portions 1a, 1a, ... arranged side by side by winding one sheet of electrode plate 1. Specifically, one sheet of electrode plate 1 is wound to form a cylinder. When attention is focused on a radial direction of an end face of the cylinder, the exposed end portions 1a, 1a in different turns in the radial direction are arranged side by side. The exposed end portions 1a, 1a, ... arranged side by side in the radial direction are the plurality of exposed end portions 1a, 1a, .... Moreover, in a layered secondary battery as a secondary battery according to a later described first variation, the exposed end 1a represents an exposed end 1a of each of electrode plates 1.

By the way, when the exposed end 1a is sandwiched between the first projections 13, and between (i) the first projections 13 and (ii) the second projections 14, stress is applied to the electrode group 4. However, in the present embodiment, both the first projections 13 and the second projections 14 are provided at portions of the principal surface 11 of the current collector plate 10 in a circumferential direction. Therefore, the stress is applied only portions of the electrode group 4 in the circumference direction, and the stress can be dispersed to the other portions of the electrode group 4 to which the stress is not applied. Thus, the stress applied to the electrode group 4 can be reduced, so that it is possible to prevent the positive electrode plate 1 and the negative electrode plate 2 from being bent even when the exposed end 1a is sandwiched between the first projections 13, and between (i) the first projections 13 and (ii) the second projections 14. As a result, it is possible to prevent the electrode group 4 from being damaged due to the bending of the electrode plate. As described above, it is preferable in the wound secondary battery that the first projections 13 and the second projections 14 are provided on the portions of the principal surface 11 of the current collector plate 10 in the circumferential direction in order to disperse the stress.

With reference to FIG. 4, the current collecting structure in which the current collector plate 10 is connected to the end face of the electrode group 4 will be described. Note that, also in FIG. 4, the positive electrode plate 1, the negative electrode plate 2, and the porous insulating layer 3 of the body portion 5 of the electrode group 4 are omitted.

The current collector plate 10 is preferably welded to the end face of the electrode group 4. For example, as described later, it is preferable that a surface of the current collector plate 10 opposite to the principal surface 11 is irradiated with energy to melt the current collector plate 10, and the melted current collector plate 10 is joined to an end face of the exposed end 1a.

The current collector plate 10 covers the exposed end 1a. The first projections 13 are disposed on the portions in the circumference direction of the principal surface 11 of the current collector plate 10. Therefore, even if sputters are produced during welding, the current collector plate 10 and the first projections 13 can reduce the tendency for the sputters to enter the electrode group 4. Thus, it is possible to prevent the electrode group 4 from being damaged during the welding, so that the discharge performance and the charge performance of the secondary battery can be ensured.

Moreover, the current collector plate 10 has the principal surface 11 provided with the first projections 13, and thus has a large thickness at the portions of the periphery thereof. Thus, in contrast to the case where the current collector plate 10 is not provided with the first projections 13, it is possible to prevent the periphery of the current collector plate 10 from being holed even if the periphery of the surface of the current collector plate 10 opposite to the principal surface 11 is irradiated with energy. Therefore, the current collector plate 10 can be solidly joined to the electrode group 4, thereby allowing the reliability of the secondary battery to be improved.

The size of the diameter of the current collector plate 10 will be described below. As described above, an upper limit of the diameter of the current collector plate 10 is equal to the diameter of the body portion 5 of the electrode group 4, but a lower limit of the diameter of the current collector plate 10 is preferably set as follows.

As described above, since the first projections 13 reduce the tendency for the exposed end 1a to be disposed outside the principal surface 11, the smaller the diameter of the current collector plate 10 is, the more the exposed end 1a inclines. Here, the thickness of the exposed end 1a is equal to the thickness of a current collector, and thus is very thin (for example, 20 µm or less). Therefore, if the exposed end 1a is inclined too much, the exposed end 1a may be bent. If the exposed end 1a is bent, it becomes difficult to electrically connect the current collector plate 10 to the electrode group 4, and the bent exposed end 1a may damage the electrode group 4, which may reduce the performance of the secondary battery. Thus, the lower limit of the diameter of the current collector plate 10 is preferably set such that the exposed end 1a inclines to such an extent that the exposed end 1a is not bent.

The length of the exposed end 1a in the axial direction of the electrode group 4 (hereinafter simply referred to as "the length of the exposed end 1a") is preferably, but not particularly limited to, 10 mm or less in view of the size of currently mainstream cylindrical secondary batteries. If the exposed end 1a is too short, the current collector plate 10 may not be solidly connected to the electrode group 4, and thus the exposed end 1a which is too short is not preferable. In contrast, if the exposed end 1a is too long, the proportion of the length of the body portion 5 to the height of the battery is small, and a sufficient amount of an active material cannot be applied to the current collector, which reduces the capacity of the secondary battery.

Moreover, it is contemplated that if the exposed end 1a has an inclination angle of about 30° to the axial direction of the electrode group 4, the exposed end 1a having a thickness of about 20 µm can be inclined without being bent. Thus, it is preferable that the lower limit of the diameter of the current collector plate 10 is approximately 10 mm smaller than the diameter of the body portion 5. In other words, the lower limit of the diameter of the current collector plate 10 is preferably smaller than the diameter of the body portion 5 by the length of the exposed end 1a.

Next, a method for fabricating the secondary battery according to the present embodiment will be described.

A positive electrode plate 1 illustrated in FIG. 1A and a negative electrode plate 2 illustrated in FIG. 1B are first prepared. Note that to provide an active material on surfaces of the current collector plates, a coating method or a vapor deposition method may be used.

Next, the positive electrode plate 1, the negative electrode plate 2, and a porous insulating layer 3 are arranged such that an exposed end 1a of the positive electrode plate 1 and an exposed end 2a of the negative electrode plate 2 respectively project from the porous insulating layer 3 in opposite directions. Then, the positive electrode plate 1 and the negative electrode plate 2 are wound in a spiral manner with the porous insulating layer 3 interposed therebetween, thereby forming an electrode group 4 illustrated in FIG. 1C.

Subsequently, a positive electrode current collector plate 10 and a negative electrode current collector plate 20 illustrated in FIG. 2 are prepared.

Subsequently, the positive electrode current collector plate 10 is placed on an upper end face of electrode group 4 with first projections 13 and second projections 14 directed downward to sandwich a plurality of exposed end portions 1a between the first projections 13, and between (i) the first projections 13 and (ii) the second projections 14.

Subsequently, the positive electrode current collector plate 10 is joined to the exposed end portions 1a of the positive electrode plate 1. Specifically, a surface of the positive electrode current collector plate 10 opposite to the principal surface 11 is irradiated with energy. As a welding method, an arc welding method (Tungsten Inert Gas (TIG) welding method), a laser welding method, or an electron beam welding method can be used. In this manner, the positive electrode current collector plate 10 can be joined to the exposed end portions 1a of the positive electrode plate 1.

After that, the electrode group 4 is turned upside down such that the positive electrode current collector plate 10 is located under the electrode group 4. Then, the negative electrode current collector plate 20 is placed on an upper end face of the electrode group 4 with first projections 13 and second projections 14 directed downward, thereby joining the negative electrode current collector plate 20 to exposed end portions 2a of the negative electrode plate 2. As a welding method, an arc welding method (TIG welding method), a laser welding method, or an electron beam welding method can be used. In this way, a current collecting structure illustrated in FIG. 4 is formed.

After that, the current collecting structure illustrated in FIG. 4 is accommodated in a battery case 6. Here, the negative electrode current collector plate 20 is brought into contact with a lower surface of the battery case 6, and the positive electrode current collector plate 10 is connected via a positive electrode lead 7 to a sealing plate 8. Then, a non-aqueous electrolyte solution is poured into the battery case 6, and then sealed by the sealing plate 8 via a gasket 9. In this way, a secondary battery according to the present embodiment illustrated in FIG. 5 is fabricated.

As described above, in the secondary battery according to the present embodiment, the diameter (D₁) of the current collector plate 10 is equal to or smaller than the diameter (D₂) of the body portion 5 of the electrode group 4, so that it is possible to reduce the decrease in volumetric energy density of the secondary battery. Moreover, the principal surface 11 of the current collector plate 10 includes the first projections 13, so that it is possible to improve the charge/discharge performance of the secondary battery.

Note that in the present embodiment, the number of the first projections 13 and the number of the second projections 14 are not limited to four. Moreover, the current collector plate 10 is not necessarily provided with the second projections 14. This is because in the present embodiment, the diameter (d₁) of the through hole 10a of the current collector plate 10 is equal to or smaller than the diameter (d₂) of the cavity 4a, and thus it is possible to reduce the tendency for the exposed end 1a to fill the through hole 10a of the current collector plate 10 even if the second projections 14 are not provided.

In the present embodiment, a cylindrical secondary battery has been described as an example of a secondary battery. However, the secondary battery may be a flat secondary battery. Alternatively, the secondary battery may be a layered secondary battery as described in a first variation below. Moreover, the current collector plate may have a configuration as described in second and third variations below.

### (First Variation)

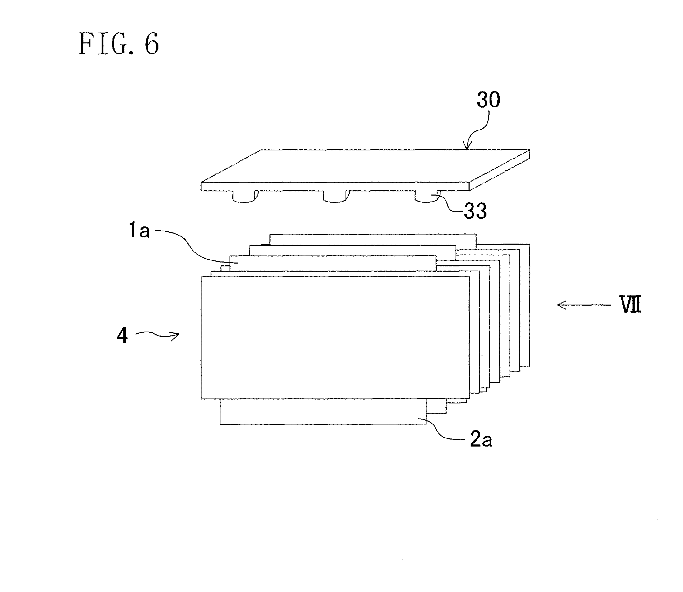

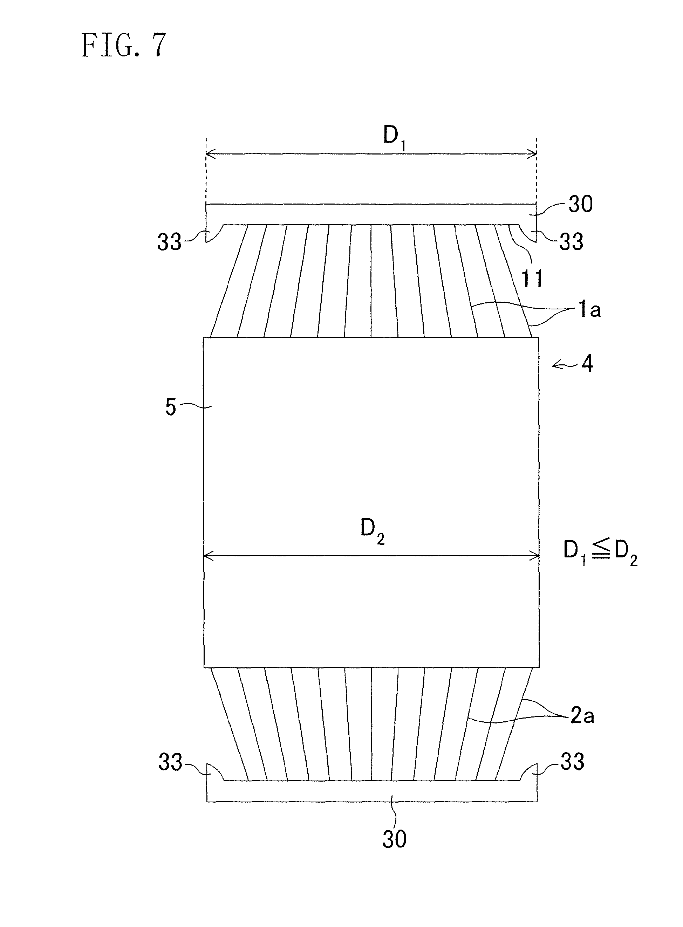

FIG. 6 is a perspective view illustrating a current collecting structure according to a first variation. FIG. 7 is a plan view illustrating the current collecting structure seen in the direction VII of FIG. 6. Note that in FIG. 6, a negative electrode current collector plate (a current collector plate disposed under an electrode group 4) is omitted. Moreover, in FIG. 7, positive electrode plates 1, negative electrode plates 2, and porous insulating layers 3 are omitted in a body portion 5 of the electrode group 4.

The wound secondary battery has been described in the first embodiment, whereas a layered secondary battery will be described in the present variation. For this reason, a current collector plate 30 (which represents, in the present invention, both a positive electrode current collector plate and a negative electrode current collector plate) has a different shape and a different configuration. Aspects different from the first embodiment will be mainly described below.

The current collector plate 30 is a rectangular plate in plan view. In a direction in which electrode plates are stacked in the electrode group 4 (in a cross direction in FIG. 7), the width (D₁) of the current collector plate 30 is equal to or smaller than the width (D₂) of the body portion of the electrode group 4. Thus, as in the first embodiment, it is possible to reduce the decrease in volumetric energy density of the secondary battery.

Moreover, the current collector plate 30 includes a principal surface 11. First projections (projections) 33 are provided on portions of the periphery of the principal surface 11. Since the first projections 33 have substantially the same function as that of the first projections 13 of the first embodiment, the current collector plate 30 can be disposed to cover exposed ends 1a. Thus, as described in the first embodiment, it is possible to ensure the charge/discharge function of the secondary battery.

Moreover, the first projections 33 are provided apart from each other in a longitudinal direction of the exposed ends 1a. This configuration is preferable because it is possible to further reduce the tendency for the exposed ends 1a to be disposed outside the principal surface 11 of the current collector plate 30.

As described above, even in the case of the layered secondary battery, using the current collector plate 30 illustrated in FIGS. 6 and 7 as a current collector plate can provide substantially the same advantages as those in the first embodiment.

Note that in the layered secondary battery as in the present variation, the first projections 33 may be provided to sandwich the exposed ends 1a over a longitudinal direction of the exposed ends 1a. In the wound secondary battery described in the first embodiment, since one sheet of the respective electrode plates is wound to form an electrode group, it is preferable to sandwich the exposed end such that stress can be dispersed to portions of the electrode group in a circumferential direction. In contrast, in the present variation, since a plurality of sheets of the respective electrode plates is stacked to form an electrode group, stress can be dispersed within the electrode group, so that the first projections 33 may sandwich the exposed ends 1a over the longitudinal direction of the exposed ends 1a.

### (Second Variation)

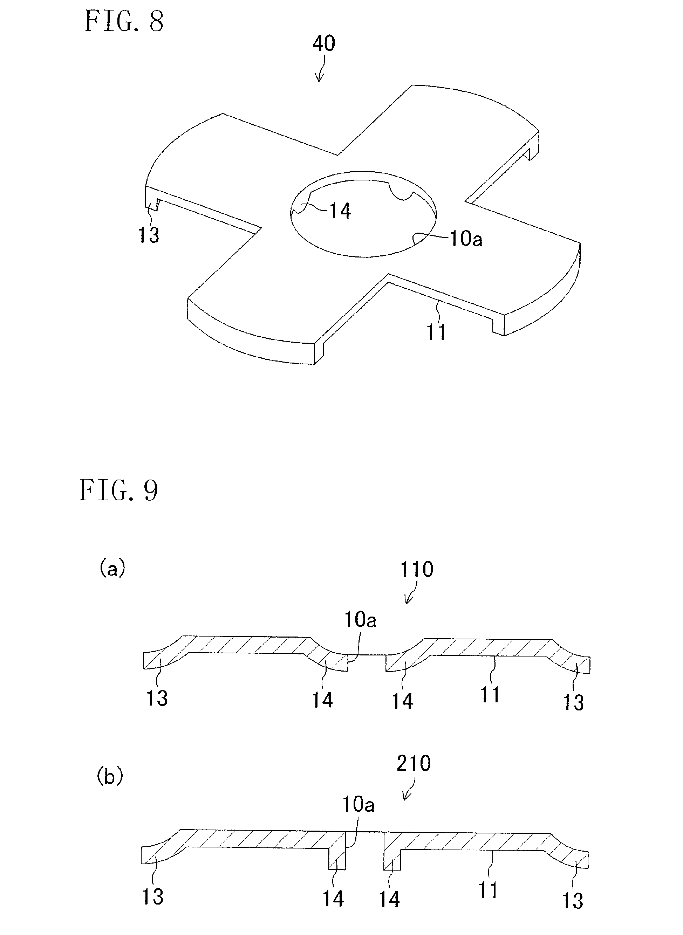

FIG. 8 is a perspective view illustrating a configuration of a current collector plate 40 of a second variation. A secondary battery according to the present variation is a cylindrical secondary battery as in the first embodiment. The present variation is different from the first embodiment in the shape of the current collector plate 40.

The current collector plate 40 is different from the current collector plate 10 of the first embodiment in that the current collector plate 40 has chipped portions in its circumferential direction. With this configuration, the current collector plate 40 of the present variation is lighter in weight than the current collector plate 10 of the first embodiment, which can reduce the weight of the secondary battery.

Moreover, since the current collector plate 40 has a principal surface 11 provided with first projections 13 and second projections 14, it is possible to achieve advantages similar to those of the first embodiment.

### (Third Variation)

FIGS. 9A and 9B are cross-sectional views illustrating configurations of current collector plates 110, 210 of a third variation. A secondary battery according to the present variation is a cylindrical secondary battery as in the first embodiment. The present variation is different from the first embodiment in the shape of first projections 13 and second projections 14.

In the current collector plate 110 illustrated in FIG. 9A, the first projections 13 and the second projections 14 of the current collector plate 110 can be formed by applying pressure to the current collector plate 110 from above in the figure. Formation of the first projections 13 and the second projections 14 using such a press forming process as in the present variation allows mass production of the current collector plate 110, which is preferable.

In the current collector plate 210 illustrated in FIG. 9B, taking into account that the inclination of an exposed end portion 1a at an outer circumference of an electrode group 4 with respect to an axial direction of the electrode group 4 is larger than that of an exposed end portion 1a of at an inner circumference of the electrode group 4, the first projections 13 are formed to slightly incline with respect to a thickness direction of the current collector plate 210, whereas the second projections 14 are formed to extend in the thickness direction of the current collector plate 210. As in this configuration, when the inclination of the first projections 13 with respect to the thickness direction of the current collector plate 210 is larger than that of the second projections 14, an exposed end portion 1a at the outermost circumference of the electrode group 4 can be inclined without being bent. Thus, it is possible to prevent the electrode group 4 from being damaged during welding.

### (Other Embodiments)

The present invention may be configured as described below.

In the method for fabricating the secondary battery according to the first embodiment, the electrode group is first formed, and then, the current collector plate is disposed on the end face of the electrode group, and after that, the current collector plate is connected to the end face of the electrode group. However, before the current collector plate is disposed on the end face of the electrode group, pressure may be applied to an exposed end to tilt the exposed end. This makes it easy to dispose the exposed end inside first projections, thereby securely joining the current collector plate to the exposed end.

The present invention can be applied to secondary batteries, may be applied to lithium ion secondary batteries described in examples below, and may be applied to nickel hydrogen storage batteries. Moreover, the present invention may be applied to electrochemical devices (for example, condensers) having the same current collecting structure as the secondary batteries.

### Examples

Examples in which the present invention is applied to lithium ion secondary batteries will be described below.

### 1. Method for Fabricating Lithium Ion Secondary Battery

### (First Example)

In a first example, a cylindrical lithium ion secondary battery and a flat lithium ion secondary battery were fabricated.

### (1) Formation of Positive Electrode Plate

First, 85 parts by weight of lithium cobaltate powder was prepared as a positive electrode active material, 10 parts by weight of carbon powder was prepared as a conductive agent, and 5 parts by weight of polyvinylidene difluoride (PVDF) was prepared as a binder. Then, the prepared positive electrode active material, the conductive agent, and the binder were mixed to produce a positive electrode mixture material.

Next, the positive electrode mixture material was applied to both surfaces of a positive electrode current collector made of an aluminum foil having a thickness of 15 µm and a width of 56 mm, and then the positive electrode mixture material was dried. After that, the portion coated with the positive electrode mixture material (positive electrode mixture material coated portion) was rolled to form a positive electrode plate having a thickness of 100 µm. At this time, the positive electrode mixture material coated portion had a width of 50 mm, and a positive electrode mixture material uncoated portion (exposed end) had a width of 6 mm.

### (2) Formation of Negative Electrode Plate

First, 95 parts by weight of artificial graphite powder was prepared as a negative electrode active material, and 5 parts by weight of PVDF was prepared as a binder. Then, the negative electrode active material and the binder were mixed to produce a negative electrode mixture material.

Next, the negative electrode mixture material was applied to both surfaces of a negative electrode current collector made of a copper foil having a thickness of 10 µm and having a width of 57 mm, and then the negative electrode mixture material was dried. After that, the portion coated with the negative electrode mixture material (negative electrode mixture material coated portion) was rolled to form a negative electrode plate having a thickness of 95 µm. At this time, the negative electrode mixture material coated portion had a width of 52 mm, and a negative electrode mixture material uncoated portion (exposed end) had a width of 5 mm.

### (3) Formation of Electrode Group

A microporous film (separator) was interposed between the positive electrode mixture material coated portion and the negative electrode mixture material coated portion, where the separator was made of a polypropylene resin having a width of 53 mm and a thickness of 25 µm. After that, the positive electrode plate, the negative electrode plate, and the separator were wound in a spiral manner using a mandrel having a diameter of 5 mm as an axis, thereby forming an electrode group. The electrode group had an outside dimension of 25 mm.

### (4) Formation of Current collector plate

First, a 50-mm-square aluminum plate having a thickness of 0.5 mm was punched out by pressing to form a disk having a diameter of 25 mm. Next, a hole having a diameter of 4 mm was formed at the center of the disk. After that, projections were formed at four positions on a peripheral portion of the disk (i.e., on a 24.5-mm-diameter portion of the disk) at regular intervals in a circumference direction of the disk, and projections were formed at four positions on the disk in the periphery of the hole (i.e., on a 4-mm-diameter portion of the disk) at regular intervals in a circumference direction of the hole. Each of the projections was perpendicular to a radial direction of the disk, and had a height of 1 mm. In this manner, a positive electrode current collector plate was formed.

In the same manner, a negative electrode current collector plate made of copper having a thickness of 0.3 mm was formed.

### (5) Formation of Current Collecting Structure

The positive electrode current collector plate and the negative electrode current collector plate were respectively brought into contact with end faces of the electrode group to sandwich the exposed ends between the projections (first projections) provided on the peripheral portion of the disk, and between (i) the first projections and (ii) the projections (second projections) provided on the disk in the periphery of the hole. After that, TIG welding was performed in a pitch of 90° inclusive of part of upper surfaces of the current collector plates opposite to the first projections and the second projections to weld the exposed end of the positive electrode to the positive electrode current collector plate and to weld the exposed end of the negative electrode to the negative electrode current collector plate, thereby forming a current collecting structure. At this time, the TIG welding was performed under conditions in which the current value was 100 A, and the welding time was 100 ms in welding the positive electrode current collector plate to the positive electrode exposed end. In welding the negative electrode current collector plate to the negative electrode exposed end, the current value was 150 A, and the welding time was 50 ms.

### (6) Fabrication of Cylindrical Lithium Ion Secondary Battery

First, the current collecting structure formed according to (1) to (5) above was inserted in a cylindrical battery case which was open at one end. After that, the negative electrode current collector plate was resistance welded to the battery case, and then the current collecting structure was accommodated in the battery case. Moreover, the positive electrode current collector plate was welded via a positive electrode lead made of aluminum to a sealing plate with an insulating plate interposed therebetween, and then the sealing plate was laser welded to the battery case.

Next, ethylene carbonate and ethyl methyl carbonate were mixed at a volume ratio of 1:1 as a non-aqueous solvent. Lithium phosphate hexafluoride (LiPF₆) serving as a solute was dissolved in the non-aqueous solvent, thereby producing a non-aqueous electrolyte.

Next, the battery case was heated and dried, and then the non-aqueous electrolyte was poured into the battery case. Thereafter, the sealing plate was crimped onto the battery case with a gasket, thereby forming a cylindrical lithium ion secondary battery (sample 1) having a diameter of 26 mm and a height of 65 mm.

### (7) Fabrication of Flat Lithium Ion Secondary Battery

First, a rectangular battery case which was open at both ends was prepared. Then, an electrode group wound in a flat shape in "(3) Formation of Electrode Group" described above was inserted into the battery case with the negative electrode exposed end of the electrode group projecting from one opening of the battery case at one end.

Next, a current collecting structure of a negative electrode was formed. A negative electrode current collector plate formed according to "(4) Formation of Current collector plate" described above was resistance welded to a U-shaped sheet metal.

Subsequently, the U-shaped sheet metal was resistance welded to a flat plate (the bottom plate of the battery case). The electrode group was pushed to a position in which the periphery of the bottom plate was laser welded to the one opening of the battery case at the one end. In this manner, the bottom of the battery case was sealed.

Then, a positive electrode exposed end projected from the opening at the other end of the battery case. A current collecting structure of a positive electrode was formed in the same manner, and a positive electrode current collector plate formed according to "(4) Formation of Current collector plate" described above was laser welded to a flat plate. Subsequently, a sealing plate serving as a lid was laser welded to the flat plate, and the flat plate was folded to be accommodated in the battery case. After that, the sealing plate was laser welded to the battery case, thereby sealing the opening at the other end of the battery case. At this time, the sealing plate had an injection hole, but the injection hole was not sealed.

Subsequently, ethylene carbonate and ethyl methyl carbonate were mixed at a volume ratio of 1:1 as a non-aqueous solvent. Then, lithium phosphate hexafluoride (LiPF₆) was dissolved into the non-aqueous solvent, thereby producing a non-aqueous electrolyte.

Subsequently, the battery case was heated and dried, the non-aqueous electrolyte was poured into the battery case, and the injection hole was sealed. In this manner, a flat lithium ion secondary battery (sample 2) was formed.

The lithium ion secondary battery formed in this manner had a thickness of 10 mm, a width of 58 mm, and a height of 100 mm. Moreover, the electrode group had a thickness of 8.5 mm, a width of 56 mm, and a height of 95 mm. The positive electrode current collector plate had a thickness of 0.5 mm, a width of 8.5 mm, and a length of 56 mm with projections each having a height of 1 mm. The negative electrode current collector plate had a thickness of 0.3 mm, a width of 8.5 mm, and a length of 56 mm with projections each having a height of 1 mm.

### (First Comparative Example)

In a first comparative example, a cylindrical secondary battery was fabricated using current collector plates which were larger than a body portion of an electrode group.

Specifically, first, a positive electrode plate and a negative electrode plate which are the same as those of the first example were used to form the electrode group. Note that the body portion of the electrode group had a diameter of 24 mm. Then, a positive electrode exposed end was covered with a positive electrode current collector plate made of aluminum (having a thickness of 0.5 mm and a diameter of 25 mm). The positive electrode current collector plate was welded to the positive electrode exposed end by TIG welding. In the same manner, a negative electrode exposed end was covered with a negative electrode current collector plate made of copper (having a thickness of 0.3 mm and a diameter of 25 mm). The negative electrode current collector plate was welded to the negative electrode exposed end by TIG welding. The welding was performed under the same conditions as those described in the first example.

Using the thus formed current collecting structure, a cylindrical lithium ion secondary battery (sample 3) was fabricated in the same manner as in the first example.

### (Second Comparative Example)

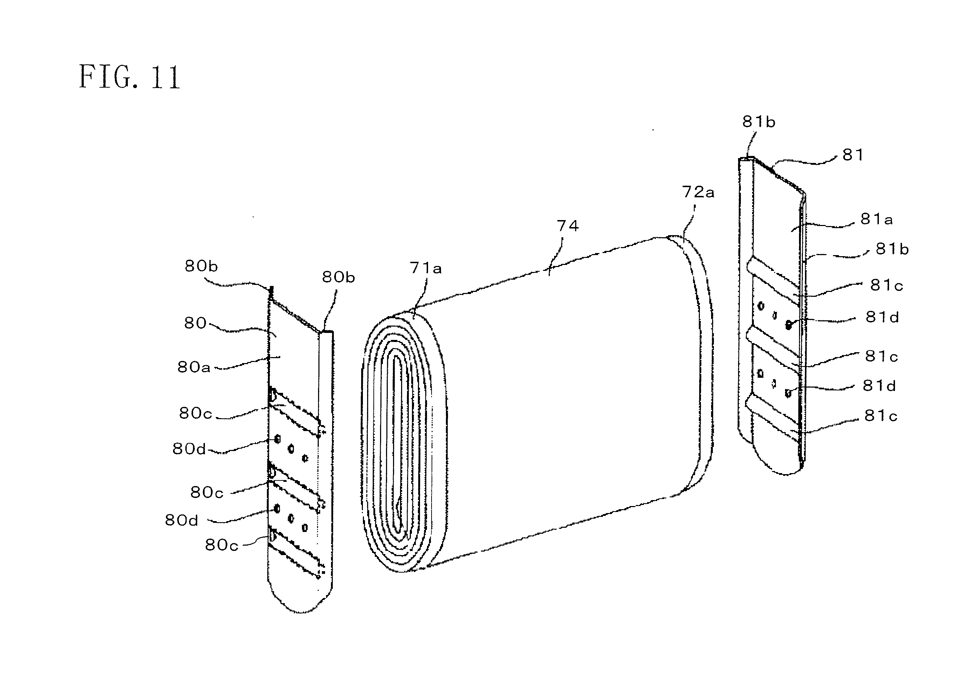

In a second comparative example, a flat lithium ion secondary battery illustrated in FIG. 11 was fabricated. Here, an electrode group had a thickness of 7.5 mm, a width of 55 mm, and a height of 95 mm. A positive electrode current collector plate had a thickness of 0.5 mm, a width of 8.5 mm, and a length of 56 mm with ribs each having a height of 1 mm. A negative electrode current collector plate had a thickness of 0.3 mm, a width of 8.5 mm, and a length of 56 mm with ribs each having a height of 1 mm. The flat lithium ion secondary battery (sample 4) was fabricated in the same manner as in the first example except that the electrode group was covered with the positive electrode current collector plate and the negative electrode current collector plate.

### (Third Comparative Example)

In a third comparative example, a lithium ion secondary battery having a current collecting structure illustrated in FIG. 10 was fabricated.

A positive electrode plate and a negative electrode plate which were the same as those of the first example were used to form an electrode group. After that, a positive electrode exposed end and a negative electrode exposed end were pressed in a direction toward a mandrel to form flat surfaces at the positive electrode exposed end and the negative electrode exposed end. Then, the flat surface of the positive electrode exposed end was brought into contact with a positive electrode current collector plate made of aluminum

(having a thickness of 0.5 mm and a diameter of 25 mm), and then the flat surface of the positive electrode exposed end was welded to the positive electrode current collector plate by TIG welding. Likewise, the flat surface of the negative electrode exposed end was brought into contact with a negative electrode current collector plate made of copper (having a thickness of 0.3 mm and a diameter of 25 mm), and then the flat surface of negative electrode exposed end was welded to the negative electrode current collector plate by TIG welding. Here, the TIG welding was performed under conditions in which the current value was 100 A, and the welding time was 100 ms in welding the positive electrode current collector plate to the positive electrode exposed end, and the current value was 150 A, and the welding time was 50 ms in welding the negative electrode current collector plate to the negative electrode exposed end.

Using the thus formed current collecting structure, a cylindrical lithium ion secondary battery (sample 5) was fabricated in the same manner as the first example.

### (Fourth Comparative Example)

In a fourth comparative example, a flat lithium ion secondary battery (sample 6) was fabricated in the same manner as in the first example except that flat surfaces were formed at exposed ends as in the current collecting structure of the third comparative example.

### 2. Evaluation of Lithium Ion Secondary Battery

The following evaluation was performed on 50 units for each of samples 1-6 of lithium ion secondary batteries fabricated in the manner described above.

### (Observation of Bending of Electrode Plate)

In samples 1, 2, 3, and 4, bending to an extent enough to cause distortion in a mixture material portion was hardly observed in the electrode plate. The electrode plate was somewhat bent when the current collector plate was brought into contact with the electrode plate while welding. In contrast, in samples 5 and 6, when the exposed end was pressed to form a flat surface at the exposed end, a large number of fractures of a mixture material portion was observed.

### (Appearance Inspection after Welding of Current Collector Plate)

In samples 1, 2, and 4, no holes due to welding were observed in the periphery of the current collector plate.

In some units of sample 3, when the current collector plate was disposed on the electrode group, a positional shift of the current collector plate occurred, and thus at an outer circumference of the electrode group, the exposed end was not sufficiently covered by the current collector plate, so that holes were observed on the periphery of the current collector plate. Such current collector plates were detected as defective.

In samples 5 and 6, due to a positional shift between the electrode group and the current collector plate, holes were observed on the periphery of the current collector plate. In addition, the flat surface formed by pressing the end face of the exposed end was not in intimate contact with the principal surface of the current collector plate. As a result, some units in which the current collector plate was not able to be welded to the electrode group were observed. For this reason, the number of defective units in sample 5 was larger than that in sample 3, and the number of defective units in sample 6 was larger than that in sample 3.

### (Evaluation of Battery Capacity and Volumetric Energy Density)

At room temperature, with respect to the design battery capacity of each sample, batteries were charged to 4.1 V with a constant current of 0.5 cmA, and then were discharged to 3.0 V with a constant current of 10 cmA. Thereafter, the battery capacities of the samples were compared to each other. As a result, in each of samples 1, 2, 5, and 6, the mean value of the battery capacity was 2650 mA. However, in samples 3 and 4, since the current collector plate was larger than the body portion of the electrode group, the electrode group was smaller than that of the other samples, and thus the mean value of the battery capacity was 2450 mAh. Note that even if such a large current was discharged, the ratio of the measured battery capacity to the designed battery capacity (capacity ratio) was approximately 100% in all of samples 1-6.

Next, using the battery volume and the actual discharge battery capacity of each sample, volumetric energy density was computed. As a result, the volumetric energy density was 276 Wh/l in battery samples 1 and 5, 164 Wh/l in samples 2 and 6, 255 Wh/l in sample 3, and 152 Wh/l in sample 4.

The above results were summarized in Table 1 from which it was found that using samples 1 and 2 made possible to discharge a large current with high fabrication yield, and further, exhibited excellent volumetric energy density.

Note that in Table 1, results of the observation of bending of the electrode plates and results of the appearance inspection after welding of the current collector plates are expressed by fractions where the total number of units is the denominator and the number of units detected as defective is the numerator.

**[Table 1]**

| Sample | 1 | 2 | 3 | 4 | 5 | 6 |
|---|---|---|---|---|---|---|
| Bending of Electrode Plate | 0/50 | 0/50 | 0/50 | 0/50 | 15/50 | 10/50 |
| Overview of Current Collector Plate after Welding | 0/50 | 0/50 | 2/50 | 0/50 | 4/50 | 5/50 |
| Battery Capacity (mAh) | 2650 | 2650 | 2450 | 2450 | 2650 | 2650 |
| Volumetric Energy Density (Wh/l) | 276 | 164 | 255 | 152 | 276 | 164 |

### INDUSTRIAL APPLICABILITY

As described above, the present invention is useful for secondary batteries having current collecting structures suitable for discharging a large current. For example, the present invention is applicable to power sources for driving electric tools, electric vehicles, and the like requiring high power; large-capacity backup power sources; storage power source; and the like.

## Claims

1. A secondary battery comprising:
an electrode group including a positive electrode plate, a negative electrode plate, and a porous insulating layer disposed between the positive electrode plate and the negative electrode plate, where the positive electrode plate, the negative electrode plate, and the porous insulating layer are arranged such that an exposed end which is one end in a width direction of at least one of the positive electrode plate and the negative electrode plate projects from the porous insulating layer; and
a current collector plate connected to the exposed end, wherein
the electrode group includes
the exposed end in which a current collector is exposed, and
a body portion which is located at an inner position relative to the exposed end in the width direction of the electrode plate, and has an active material provided on a surface of the current collector,
the current collector plate includes
a principal surface to which the exposed end is connected, and
projections which are disposed on at least portions of a periphery of the principal surface, and sandwich the exposed end in a direction perpendicular to a longitudinal direction of the exposed end, and
in a direction in which the positive electrode plate, the porous insulating layer, and the negative electrode plate are sequentially arranged, a width of the current collector plate is equal to or smaller than a width of the body portion.

2. The secondary battery of claim 1, wherein
in the electrode group, the positive electrode plate and the negative electrode plate are wound with the porous insulating layer interposed therebetween, and
the electrode group has a cylindrical shape.

3. The secondary battery of claim 2, wherein
the electrode group has a cavity extending in an axial direction,
the current collector plate has a through hole passing through the current collector plate in its thickness direction,
the current collector plate is connected to the exposed end such that the through hole communicates with the cavity,
a diameter of the through hole is equal to or smaller than a diameter of the cavity, and second projections are provided on portions of the principal surface of the current collector plate in a periphery of the through hole, where the second projections reduce a tendency for the exposed end to be disposed to fill the through hole.
